(19) Europäisches Patentamt
European Patent Office
Office européen des brevets

(11) **EP 2 530 607 A1**

(12) **EUROPEAN PATENT APPLICATION**

(43) Date of publication:
**05.12.2012 Bulletin 2012/49**

(51) Int Cl.:
***G06F 17/30*** (2006.01)

(21) Application number: **11305670.9**

(22) Date of filing: **01.06.2011**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **Thomson Licensing**
**92130 Issy-les-Moulineaux (FR)**

(72) Inventors:
• **Chevallier, Louis**
**35520 La Mézière (FR)**
• **Lambert, Anne**
**35135 Chantepie (FR)**
• **Vigouroux, Jean-Ronan**
**35000 Rennes (FR)**

(74) Representative: **Thies, Stephan**
**Deutsche Thomson OHG**
**European Patent Operations**
**Karl-Wiechert-Allee 74**
**30625 Hannover (DE)**

(54) **Method and computer program product for interactive changing distances between multidimensional data with structural properties projected on a display device**

(57) A method and a computer program product for interactively changing distances between multidimensional data (A, B) with structural properties projected on a display device comprising a graphical user interface for interactive changing the distance between selected data points (A, B) projected on the display device and rearranging of data points interconnected with said data points with structural properties are recommended. A Principal Component Analysis and a Singular Value Decomposition are applied to determine a linear combination of projections of a first projection and said linear combination is mixed with a linear combination of projections of a second projection by selecting lines of a projected version of a centered version of the matrix of data points that best approaches the changed distance according to the second projection and determining coordinates for rearranging the data points is performed by using the weights of eigenvectors of the second projection.

Fig. 1

**Description**

Field of the invention

The invention relates to a method and a computer program product for interactively changing distances between multidimensional data with structural properties projected on a display device.

Background

The principle of projection methods is based on the idea that the multidimensional data points can be projected on a lower dimensional space to illustrate the structural properties of the data by distances between projected data points as 2D or 3D graphics. Such multidimensional data points are e.g. multimedia documents described by a large set of metadata or other data collections as e.g. a collection of songs, movies or catalogues. Specific algorithms are used for visualizing the collection and illustrating a difference or certain conformity of elements of said collection which compute some axes for projection. Well known methods to perform such dimension reduction are e.g. a so-called principal component analysis in the following abbreviated as PCA and a so-called Factor Analysis as a data reduction method. PCA is a transformation that transforms the data to a new coordinate system such that the greatest variance by any projection of the data comes to lie on the first coordinate called the first principal component, the second greatest variance on the second coordinate, and so on, wherein variance describes how far values lie from the mean. Factor analytic techniques are applied to reduce the number of variables and to detect the structure in the relationships between variables. That means that several techniques are well known to display a multidimensional data collection on a display device. However, the projection result does not always fit to user's expectations and a lot of manually rearranging work has to be done if the user changes the distance between projected data points and structural properties in view of other data points interconnected with said changed data points shall not be lost. Therefore, it is desired to have means applicable to reduce manually work load for correct rearranging projected multidimensional data points interconnected with data points for which the distance has been changed by a user.

Invention

A problem to be solved by the invention is to provide a method and computer program product for interactive changing distances between multidimensional data with structural properties projected on a display device and for rearranging data points interconnected with data points for which the distance has been changed by a user.
It is an aspect of the invention to navigate in a collection of documents, projected on a 2D or 3D display device and having each a certain number of metadata interconnecting said documents, in a personalized way, to change the distance between selected documents and automatically rearranging documents interconnect with said documents which have been changed concerning their distance to each other. That means that although the projected distance between multidimensional data is determined by structural properties, a user shall be able to change the distance between selected points which need to be better represented and nevertheless the system shall try to fulfil the constraints. It is recommended to let the user interact with projections obtained through a known projection method by pointing with a graphic user interface on the documents that should be made closer or more remote in the projected space. This object is achieved by the features specified in independent claims. Advantageous embodiments are specified in dependent claims.
The method for an interactive exploration of a data collection of interconnected multidimensional data is based on graphically moving of at least one data point or item respectively and refreshing the display according to a changed distance between projected data. Upon selection of two data elements, the axes used for the projection will be reconsidered so that the distance between the projected points corresponds to the distance interactively specified by the user. Therefore, two weight vectors in case of a 2D projection or three weight vectors in case of a 3D projection are used to describe linear combinations of the current projection. The user moves the points by using a graphic user interface, expecting the final distance between the points in the new projected space. Since it is impossible to change the coordinates of the documents in the original space as they correspond to values of the modalities describing each document, it is proposed to seek the axes that will best respect the proximity or remoteness constraint expressed by the user. To obtain a practicable algorithm it is proposed to constrain the sought axes to be ones produced by the projection method applied to the collection, and not fully free axes. In addition, to keep some stability when the proximity or remoteness constrains accumulate, it is proposed to determine the axes using a process having a memory of the constraints already issued.
According to the invention, it is taken advantage of the Principal Component Analysis in the following abbreviated as PCA and in a first step the line centered version of the matrix describing the documents in a space of coefficients is computed, wherein each column represents a document and each line a coefficient seen as a dimension of the space. To obtain this PCA, the Singular Value Decomposition, in the following abbreviated as SVD, is performed on the line centered version of the matrix. The key property is that a matrix of orthogonal vectors provides the principal directions of the line centered version of the matrix describing the documents, i.e., the first vector of the real unitary matrix gives the direction of the maximal dispersion and the second is the orthogonal vector with remaining maximal dispersion, etc. and these vectors are directly obtained by the SVD of the centered version of the matrix of documents.

The Principal Component Analysis of the line centered version of the matrix, wherein each column represents a document and each line a coefficient as a dimension of the space, consist in using the real unitary matrix as basis of the space. The coordinates of the documents using this new basis are using the properties of the Singular Value Decomposition. It is customary in Principal Component Analysis theory to observe that the line centered matrix can be approximated by keeping only a few of the non-null singular values of the SVD of the line centered version of the matrix describing the documents. That means that for typical datasets only a limited number of projected coordinates are significantly different from zero, i.e. relevant. The typical display based on the Principal Component Analysis uses the two first vectors of the orthogonal matrix as basis and the two first lines of $Y$ as coordinates. However, for datasets with a large number of variables, the singular values may decrease slowly, so the distribution the data over the original space is hardly accounted for when retaining only the 2 or 3 first dimensions. The standard solution used in Principal Component Analysis is somewhat arbitrary.

Therefore according to the invention linear combinations - two for a 2D display or three for a 3D display - among the first dimensions of the first lines are used as coordinates for the elements, e.g. in such a way that the distance between a specified pair of document is as close as possible to a given value. Using the two lines which would ensure that the expected distance is best approached and to take into account the already prescribed constraints, a mixture of the old axes and the new axes is used. That means that in case of a 2D projection, two additional weight vectors of a length describing the linear combinations of the lines are used for the current projection. The two lines of coordinates that best approach the prescribed distance being selected and additional vectors for which the weight corresponds to a projection using only real eigenvectors is used so that a mixture of expected and real vectors can be generated. By using a damping factor for stability, the final coordinates of the document in the new projection are than determined by updating said additional vectors. The method may be repeated several times until the result of the arrangement fits to the taste and expectations of the user. Advantages of the invention are an interactive exploration of a data collection of interconnected multidimensional data based on graphically moving of at least one pair of data points or item respectively and that a time consuming manually calculation and rearrangement of documents automatically will be performed by a computer program product carrying a computer program embodied in a computer readable medium adapted to perform the method described above. That means that a display of a collection of documents which in comparison to an arrangement provided by a known projection method fits better to the taste or desire of the user in a short time and with low expenditure for the user. Furthermore, the present invention contributes to noise reduction as the rearrangement is based on an arrangement of data points best approaches the changed distance.

In principle, the inventive method is suited for an interactive exploration of data collections as e.g. a collection of catalogues, songs or videos to be arranged according to a difference or certain conformity of the elements or items of said collection of interconnected multidimensional data. A further possible context is the exploration of multimedia documents archive. It applies to the exploration of any data collection whose elements can be described by a large enough set of metadata figures or that can be described by their mutual distances. The metadata or distances can possibly be only partially known.

The specific nature of the invention as well as other objects, advantages, features and uses of the invention will become evident from the following description of a preferred embodiment taken in conjunction with the accompanying drawings.

Drawings

Exemplary embodiments of the invention are described with reference to the accompanying drawings, which show in:

Fig. 1     a schematic of a projection of multidimensional data points, wherein two data points are arranged in a certain distance;

Fig. 2     a schematic of a projection of multidimensional data points of Fig. 1, wherein the two points interactively have been arranged closer and interconnected points are rearranged according to said change;

Fig. 3     a diagram of singular values in view of its space dimension;

Fig. 4     a graphic illustration of notations used for the description the of the invention;

Fig. 5      a projection of catalogues arranged according to a known projection method;

Fig. 6      a projection of catalogues with a changed distance between two catalogues and rearranged interconnected catalogues;

Fig. 7      a final projection of catalogues as desired by a user and

Fig. 8      a schematic of standard positioning of the elements in a space using standard PCA or Multi Dimensional Scaling.

Exemplary embodiments

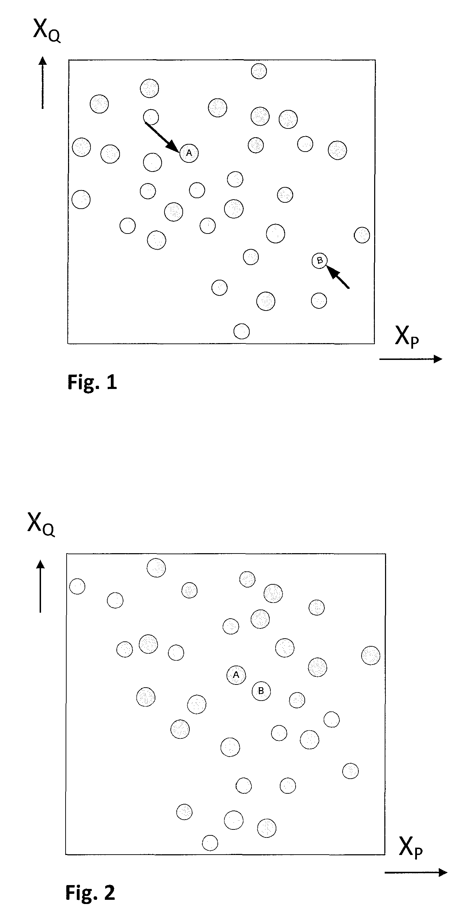

Fig. 1 shows a schematic of a projection of multidimensional data points, wherein two data points A and B are arranged in a certain distance, which interactively shall be changed by a user. Fig. 2 illustrates by a schematic a projection of the multidimensional data points A and B of Fig. 1, wherein the two selected data points A and B interactively have been arranged closer and interconnected data points are rearranged according to said change by applying the present invention. However, it is also possible to arrange two selected data points interactively in a bigger distance as originally arranged by a known projection method and rearranging interconnected data points according to said change by a method and a computer program product according to the present invention, which perform said rearrangement in a desired manner. Coordinates of the projected data points A and B are illustrated as a horizontal component $X_P$ and a vertical component $X_Q$.

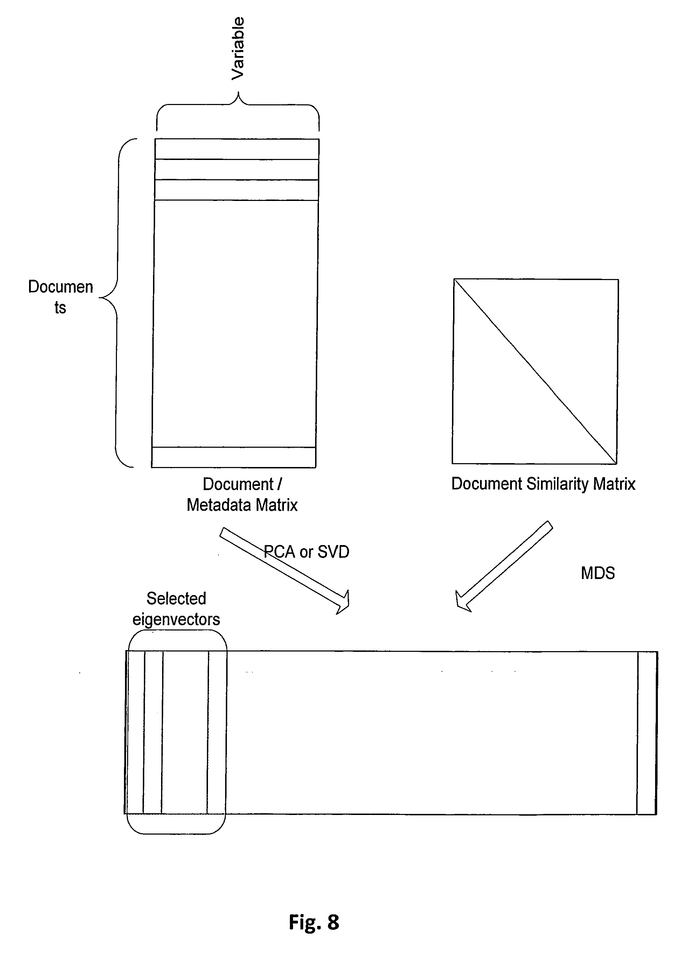

The direct display of a collection of documents characterized by many dimensions or modalities is impossible, for the displays can handle only 2D or 3D graphics. It is therefore necessary to visualize the collection using specific algorithms, which compute some axes to use for projection. However, the standard axes, obtained by the standard projection algorithm, called Principal Component Analysis PCA, do not always satisfy the user. It would be interesting to let the user interact with the projection, to express such meaningful for him things as, two elements in the collection are closer or farther than they are represented on the display because he feels that for instance two movies are very alike or very different in subject or genre for instance. Since it is impossible to change the coordinates of the documents in the original space, they correspond to values of the modalities describing each document; it is proposed to seek the axes that will best respect the proximity or remoteness constraint expressed by the user. To obtain a practicable algorithm it is proposed to constrain the sought axes to be ones produced by the Principal Component Analysis PCA of the collection, and not fully free axes. In addition, to keep some stability when the proximity or remoteness constrains accumulate, it is proposed to determine the axes using a process having a memory of the constraints already issued. Let us first describe how the user can get a global view at a large collection and explore it as illustrated in Fig. 8 by a schematic of standard positioning of the elements in a space using the standard Principal Component Analysis PCA or the Multi Dimensional Scaling MSD. The user can apply a filter on the data in order to get a subset of it - the filter would consist in some constraints on the metadata. This requires that the user knows the metadata scheme and this could be somewhat laborious - especially in consumer context. The resulting subset is still to be checked. If the documents are complex enough as e.g. movies, many metadata or coefficients are used for their description. The metadata may be numbers as for instance the budget or discrete values as actors, genres etc. However, it possible to code all the values as numbers in a sensible manner and to use these numbers as coordinates to locate the document in a space that contains all the documents.

For a 2D or 3D display of the collection, 2 or 3 coefficients should be selected among the full set of metadata to visualize the collection. The selection of the best ones would be a tricky and lengthy process for the user. The Principal component Analysis PCA provides a combination of the coefficients that results into an optimal 2D or 3D representation or so-called projection of the data based on their spreading in the original space. This is also known as the Karhunen-Loeve transformation. The advantage of such a projection is that it determines the axis accounting for most of the variability in the coefficients. This ensures a projection having a minimal distortion. Being a linear transformation, it is continuous: a smooth motion in the 2D space corresponds to a smooth motion in the original space. The drawback is that the axes used by the projection, being linear combinations of the original axes, make little sense to the user.

In some cases, the metadata coefficients are not all available, or only the distance or similarity between each pairs of elements is provided to the system.

This distance allows a step by step browsing of the catalog which could be interesting in itself for a user who has no precise goal. But it does not allow a global view of the catalog.

The distances can be computed from the metadata, many functions can be chosen for this purpose.

From the square matrix of the distances, the Multi Dimensional Scaling MDS algorithm can create coordinates for elements in a space where the Euclidean distances are close to the distance given in input.

Besides the Principal Component Analysis PCA and the Multi Dimensional Scaling MDS, there exist several other algorithms that can provide projections as e.g. Spectral Clustering, which differ in how the final projection fits with the original one.

To summarize, there exists an algorithm as e.g. the Principal Component Analysis PCA that enables to display in 2D or 3D a collection of objects described by many characteristics or many features, which are naturally located in a huge dimensional space. This algorithm determines axes on which to project the documents by selecting the linear combinations of the original axes having a maximal variation. This ensures a projection having minimal distortion. There even exist a Multi Dimensional Scaling MDS algorithm that can determine coordinates in an Euclidean space for objects in a collection of objects characterized by mutual distances. The coordinates are such that the Euclidian distances between the objects are as close as possible of the distances given input. In addition, the axes on which the coordinates are measured are such that the first 2 or 3 coordinates form the best representation of the set of objects in 2D or 3D.

These methods ensure the best representation of the collection of objects from a global point of view. There may cases however, where the user would like to introduce some knowledge on the projection, by saying that a pair of objects should be closer or farther from they currently are. Therefore it is recommended to let the user interact with the projections obtained through the previous methods by pointing out the elements that should be made closer or more remote in the projected space. When the user examines the projection, he may point out some elements that are similar to him based on his personal a priori feeling while these elements are located apart in the projection.

This may happen when the current projection i.e., the selected variable combination does not make much sense to the user.

Upon selection of two data elements, the axes used for the projection will be reconsidered so that the distance between the projected points corresponds to the distance interactively specified by the user. After several interactions, the axes actually used by the projection will hopefully match the way the user regards the data provided that the available variable capture this aspect. As shown in Fig. 1, the user wants to make elements A and B, which represent data points A and B closer. The user then pushes the elements representing data points A and B together by using a graphic interface. The position of each other document is recomputed according to the metadata as said document are interconnected by said metadata.

Let us describe here the Principal Component Analysis PCA and the method as well as a computer program according to present invention. A Principal Component Analysis PCA based on Singular Value Decomposition SVD, is e.g. presented in the Wikipedia article "Principal Component Analysis" http://en.wikipedia.org/wiki/Principal_component_analysis retrieved on 25th May 2011, and corresponding terms are here used as it is common practice. That means that e.g. a matrix $X^T$ describes a number of documents $N$ in a space of dimension $M$. Equivalently each document is described by $M$ coefficients. $X$ is a $M \times N$ matrix, each column representing a document and each line a coefficient seen as a dimension of the space. It is customary in data analysis to consider the matrix $X^T$ where each document is represented on a line and each coefficient as a column.

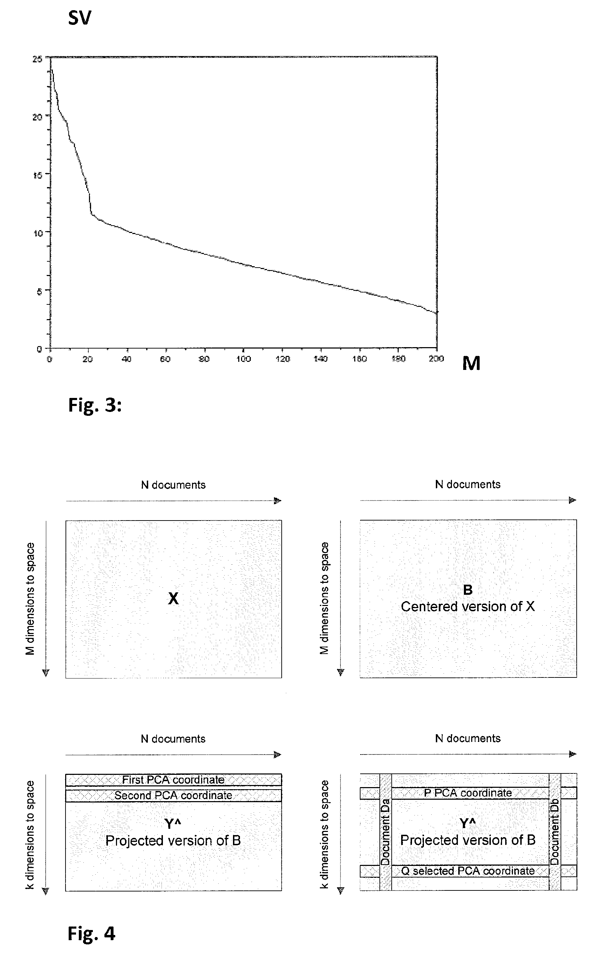

Then for Principal Component Analysis PCA as illustrated in Fig. 4:

Compute $B$ the line centered version of $X$:

- Let $u = \dfrac{1}{N} X \mathbf{1}_{N,1}$ be the mean vector of the documents,

   wherein $u$ has $M$ lines and 1 column.
- Let $B = X - \mathbf{1}_{1,N} u \ B = X - 1_{N,1} u^r$; the line centered copy of X.

It is recommended to decompose $B$ using the Singular Value Decomposition SVD: $B = W \Sigma V^T$. The key property is that $W$ is a matrix of orthogonal vectors which give the principal directions of $B$, i.e., the first vector of $W$ gives the direction of the maximal dispersion of $B$, the second is the orthogonal vector with remaining maximal dispersion, etc.

The Principal Component Analysis PCA of $B$ consists in using $W$ as basis of the space. The coordinates of the documents using this new basis are, using the properties of the SVD:

$$
\begin{aligned}
Y &= W^{-1} B \\
&= W^T W \Sigma V^T \\
&= \Sigma V^T
\end{aligned}
$$

It is customary in Principal Component Analysis PCA theory to observe that $Y$ can be approximated by keeping only a few of the non-null singular values of $B$:

$$\hat{Y} \;=\; \Sigma_k B$$

With $\Sigma_k$ equal to $\Sigma$ except for the least $M$-$k$ singular values which are replaced by 0. This is motivated by the fact that, for typical datasets, only $k$ singular values are significantly different from 0.

The typical display based on the Principal Component Analysis PCA uses the two first vectors of $W$ as basis and the two first lines of $Y$ as coordinates. However, for datasets with a large number of variables, the singular values may decrease slowly, so the distribution the data over the original space is hardly accounted for when retaining only the 2 or 3 first dimensions. The standard solution used in Principal Component Analysis PCA is somewhat arbitrary.

An example plot of singular values on a real life data matrix with a low rank is illustrated in Fig. 3 representing a diagram of singular values SV in view of its space dimension M.

According to the present invention it is recommended to choose two linear combinations for a 2D display or three linear combinations for a 3D display among the $k$ first dimensions, which means $k$ first lines of $\hat{Y}$ as coordinates for the elements, in such a way that the distance between a specified pair of document is as close as possible to a given value.

As an embodiment of the invention, a case is considered where a 2D projection is used, which is also extendable for a 3D projection.

It is recommended to use two weight vectors of length $k$: $P$ and $Q$ to describe the linear combinations (mixtures) of the lines of $\hat{Y}$ used for the current projection.

That means that at the initialization:

$$P = \begin{pmatrix} 1 \\ 0 \\ \vdots \\ 0 \end{pmatrix}$$

$$Q = \begin{pmatrix} 0 \\ 1 \\ \vdots \\ 0 \end{pmatrix}$$

$X_P = P^T\hat{Y}$ and $X_Q = Q^T\hat{Y}$ are the 2D coordinates of the documents using $P$ and $Q$.

The user selects two documents $D_a$ and $D_b$ in the projected space, wherein $a$ and $b$ corresponding to their indices in the dataset. The Principal Component Analysis PCA coordinates of these two documents are $\hat{Y}_a$ and $\hat{Y}_b$.

In their original position, in the projected space their distance is $d_1 = ||\hat{Y}_a\text{-}\hat{Y}_b||$.

The user moves the points, expecting their final distance in the new projected space is $d_2$.

Than it is recommended to select the two lines of $\hat{Y}$ that best approach the prescribed distance:

$$(i,j) = \arg\min_{i,j} \left| \sqrt{\left(\hat{Y}_{ai} - \hat{Y}_{bi}\right)^2 + \left(\hat{Y}_{aj} - \hat{Y}_{bj}\right)^2} - d_2 \right|$$

Using the two lines $i$ and $j$ of $\hat{Y}$ would ensure that the expected distance is best approached. To ensure some stability of the display, and to take into account the already prescribed constraints, we use a mixture of the old axes and the two new axes.

Furthermore, it is recommended to use two additional vectors $P_d$ and $Q_d$ of size $k$ :

$$P_d = \left( \begin{array}{c} \vdots \\ P_{du} = 1 \text{ if } u = i \text{ and } 0 \text{ otherwise} \\ \vdots \end{array} \right)$$

$$Q_d = \left( \begin{array}{c} \vdots \\ Q_{du} = 1 \text{ if } u = j \text{ and } 0 \text{ otherwise} \\ \vdots \end{array} \right)$$

, wherein said $P_d$ and $Q_d$ are the weight corresponding to a projection using only the $i$ and $j$ eigenvectors.

Then Let:

$$P_\alpha \quad = \quad \alpha P + (1-\alpha) P_d$$

$$Q_\alpha \quad = \quad \alpha Q + (1-\alpha) Q_d \, ,$$

wherein

$P_\alpha$ and $Q_\alpha$ represents the mixture to be found and $\alpha$ is a damping factor used to ensure the stability.

Then $X_P = P_\alpha{}^T \hat{Y}$ and $X_Q = Q_\alpha{}^T \hat{Y}$ are the final coordinates of the document in the new projection.

Finally $P$ and $Q$ being updated, so that

$$P \quad = \quad P_\alpha$$

$$Q \quad = \quad Q_\alpha$$

It has to be noted that the distance between only two elements is handled for generating the projection. The damping factor ensures that the previous constraints are incorporated in the memory of the process.

On a Graphically User Interface GUI, the data elements A and b representing data points A and B should be moved directly by the user in the projected space. This process is not described in more detail because it is well known, and according to the present invention only the changed distance has to be managed. A further possibility is to designate a set of elements and ask the system to find the representation where their position is as close as possible.

Furthermore, it is interesting to compute intermediate views on a graphical interface, for instance on the basis of the interpolation of the coordinates between $X_P$, $X_Q$ and $X_{P\alpha}$, $X_{Q\alpha}$ to ensure smoothness of the display.

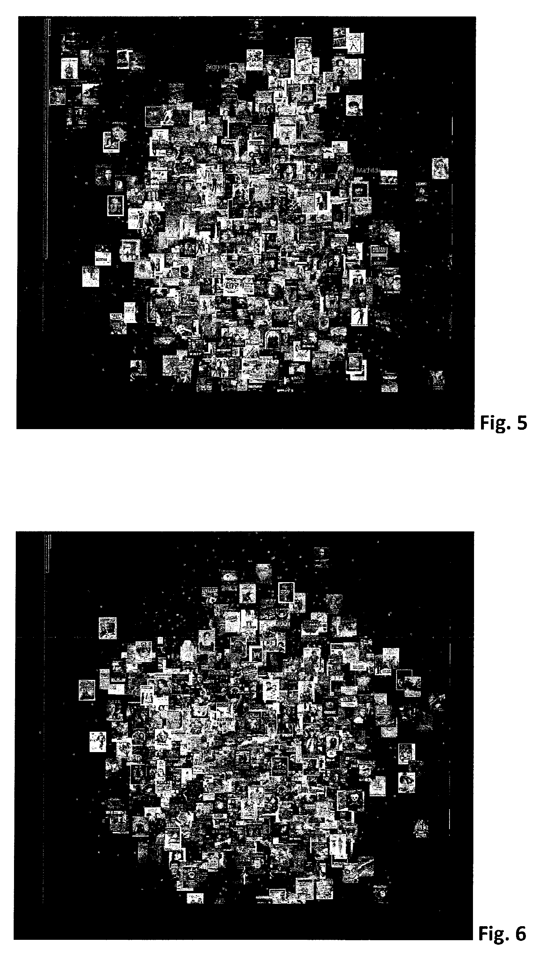

As an example, a projection of catalogues arranged according to a known projection method is illustrated in Fig. 5.

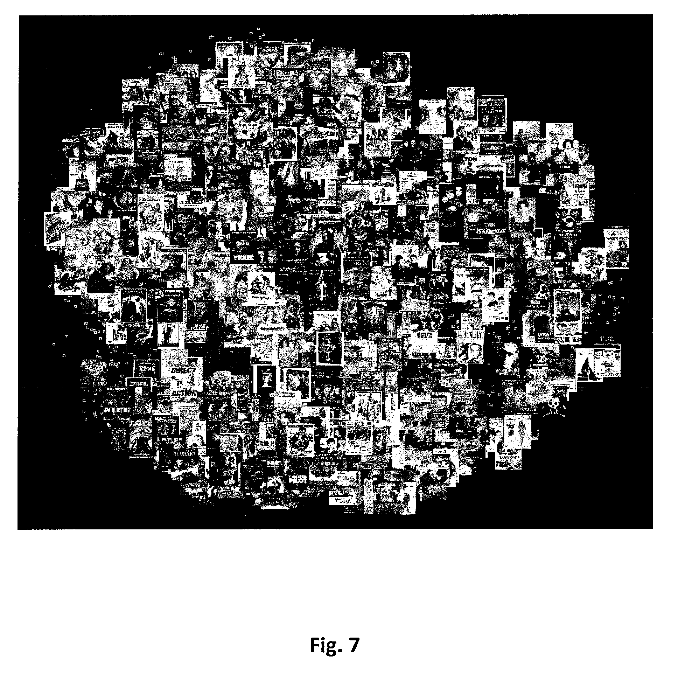

Fig. 6 illustrates a projection of catalogues with a changed distance between two selected catalogues and a rearrangement of interconnected catalogues, which may be repeatedly performed for different elements or so-called data points and distances to get a final projection of catalogues as e.g. illustrated in Fig. 7 and desired by a user.

A further embodiment is e.g. related to a collection of songs, where two songs which are displayed far one from the other. The user considers on the contrary that those two songs are very similar. He/she will then move one song nearer to the other song - and consequently, the dimensions used for the projection will be reconsidered so that the distance between the projected points corresponds to the distance interactively specified by the user. The displaying of the other songs will be refreshed accordingly.

Although the invention has been shown and described with respect to specific embodiments thereof, it should be understood by those skilled in the art that the foregoing and various other changes, omissions and additions in the form and detail thereof may be made therein without departing from the spirit and scope of the claims.

**Claims**

1. Method for interactive changing distances between multidimensional data points (A, B) with structural properties projected on a display device
**characterised by** a graphical user interface for interactively changing the projected distance between selected data points (A, B) projected on the display device and rearranging of data points interconnected with said data points with structural properties by determining an initial representation based on a projection obtained from Principal Component Analysis, and then updating said projection by selecting the data points (A, B) to be brought closer or farther, selecting axes in the initial projection that best respect the distance between said selected data points (A, B) and displaying the collection of points according to projection axes which are a mixture of the initial axes and the axes found to best respect the changed distance between said selected data points (A, B).

2. Method according to claim 1, wherein the data points are cover sheets of catalogues.

3. Method according to claim 1, wherein the data points comprise video pictures.

4. Method according to claim 1, wherein the data points are cover sheets of jewel cases of optical media recorded with audio or video or data files.

5. Method according to claim 1, interactively changing the projected distance between selected data points (A, B) is successively repeated.

6. Method according to claim 1, wherein previous determined projection axes are again used for a next rearranging.

7. Method according to claim 1, wherein the distance between data points represents a difference or certain conformity of elements or items at least of the collection of interconnected multidimensional data.

8. Computer program product carrying a computer program embodied in a computer readable medium adapted for interactive changing distances between multidimensional data (A, B) with structural properties projected on a display device according to one of the method claims 1 to 7.

9. Computer program product according to claim 8, comprising a graphical user interface for interactive changing the distance between selected data points (A, B) projected on the display device and for rearranging of data points interconnected with said data points having interactively changed concerning the distance between two selected data points (A, B).

Fig. 1

Fig. 2

SV

**Fig. 3:**

**Fig. 4**

Fig. 5

Fig. 6

**Fig. 7**

Variable

Documen
ts

Document /
Metadata Matrix

Document Similarity Matrix

PCA or SVD

MDS

Selected
eigenvectors

**Fig. 8**

**European Patent Office**
Europäisches Patentamt
European Patent Office
Office européen des brevets

## EUROPEAN SEARCH REPORT

Application Number

EP 11 30 5670

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | JEONG D ET AL: "iPCA: An Interactive System for PCA-based Visual Analytics", Technical Report, no. CVC-UNCC-09-08 2009, XP000002657831, Charlotte Visualization Center, University of North Carolina at Charlotte, NC, US Retrieved from the Internet: URL:http://viscenter.uncc.edu/techreports.html [retrieved on 2011-08-30] * section 4.2 * | 1-9 | INV. G06F17/30 |
| X | M. GRANITZER ET AL: "Learning Term Spaces Based on Visual Feedback", 17TH INTERNATIONAL CONFERENCE ON DATABASE AND EXPERT SYSTEMS APPLICATIONS (DEXA'06), 2006, pages 176-180, XP55005333, DOI: 10.1109/DEXA.2006.82 ISBN: 978-0-76-952641-6 * section 3 * * section 4.1; figure 1 * | 1-9 | |
| X | JING YANG ET AL: "Semantic Image Browser: Bridging Information Visualization with Automated Intelligent Image Analysis", 2006 IEEE SYMPOSIUM ON VISUAL ANALYTICS AND TECHNOLOGY, 1 October 2006 (2006-10-01), pages 191-198, XP031032031, IEEE ISBN: 978-1-4244-0591-6 * section 4.2 * | 1-9 | TECHNICAL FIELDS SEARCHED (IPC) G06F G06K |

-/--

The present search report has been drawn up for all claims

| Place of search | Date of completion of the search | Examiner |
|---|---|---|
| Berlin | 1 September 2011 | Polzer, Andreas |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

**EUROPEAN SEARCH REPORT**

Application Number

EP 11 30 5670

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | TATEMURA J: "Graphical relevance feedback: visual exploration in the document space", 2000 IEEE INTERNATIONAL SYMPOSIUM ON VISUAL LANGUAGES, 10 September 2000 (2000-09-10), - 13 September 2000 (2000-09-13), pages 39-46, XP010514492, IEEE, PISCATAWAY, NJ, US ISBN: 978-0-7695-0840-5 * section 4.2; figure 1 * ----- | 1-9 | |

**TECHNICAL FIELDS SEARCHED (IPC)**

The present search report has been drawn up for all claims

| Place of search | Date of completion of the search | Examiner |
|---|---|---|
| Berlin | 1 September 2011 | Polzer, Andreas |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- *Principal Component Analysis,* 25 May 2011, http://en.wikipedia.org/wiki/Principal_component_analysis